(19) Europäisches Patentamt
European Patent Office
Office européen des brevets

(11) Numéro de publication: **0 333 167 B1**

(12) ## FASCICULE DE BREVET EUROPEEN

(45) Date de publication de fascicule du brevet: **18.08.93**

(51) Int. Cl.5: **H04L 1/06**, H04L 1/20

(21) Numéro de dépôt: **89104595.7**

(22) Date de dépôt: **15.03.89**

(54) **Récepteur pour système de transmission par voie hertzienne à diversité d'espace, comprenant un combineur de diversité.**

(30) Priorité: **18.03.88 FR 8803546**

(43) Date de publication de la demande:
**20.09.89 Bulletin 89/38**

(45) Mention de la délivrance du brevet:
**18.08.93 Bulletin 93/33**

(84) Etats contractants désignés:
**CH DE ES FR GB IT LI NL SE**

(56) Documents cités:
**EP-A- 0 227 015**
**US-A- 4 146 840**
**US-A- 4 281 411**

**L'ONDE ELECTRIOUE, vol. 66, no. 2, mars 1986, pages 114-129, Paris, FR; O. TOUTAN et al.: "Auto-adaptivité dans les faisceaux hertziens numériques"**

(73) Titulaire: **ALCATEL TELSPACE**
**5, rue Noel Pons**
**F-92734 Nanterre Cédex(FR)**

(84) Etats contractants désignés:
**DE ES FR GB IT NL SE**

(73) Titulaire: **ALCATEL N.V.**
**Strawinskylaan 535**
**NL-1077 XX Amsterdam(NL)**

(84) Etats contractants désignés:
**CH LI**

(72) Inventeur: **Le Polozec, Xavier**
**104/106 rue Cambronne**
**F-75015 Paris(FR)**
Inventeur: **Pujol, Dominique**
**131 rue des Dames**
**F-75017 Paris(FR)**

(74) Mandataire: **Weinmiller, Jürgen et al**
**Lennéstrasse 9 Postfach 24**
**D-82336 Feldafing (DE)**

EP 0 333 167 B1

**Description**

La présente invention concerne les récepteurs de systèmes de transmission par voie hertzienne et, plus particulièrement, ceux qui font appel à la diversité d'espace pour limiter les conséquences de la distorsion apportée par la propagation par trajets multiples.

On trouvera une description d'un récepteur de ce type dans l'article "Auto-adaptivité dans les faisceaux hertziens numériques", par O. Toutan et O. de Luca, publié dans la revue "L'Onde Electrique", mars 1986, Vol. 6, n°2. Il y est indiqué que le signal reçu par une antenne peut être considéré comme la somme de trois signaux, un signal direct et deux signaux retardés et que, vis-à-vis de la combinaison de ces signaux, la fonction de transfert du milieu de propagation comprend, en particulier, un terme sensible à la fréquence du signal, responsable de distorsions du signal reçu.

Il est donc proposé, dans cet article, de combiner les signaux (composites) issus de deux antennes espacées verticalement, recevant des signaux (individuels) ayant respectivement traversé le même milieu de transmission et subi des retards identiques, mais dont les phases relatives sont différentes. Un combineur de diversité effectue la somme des signaux reçus par ces deux antennes, en apportant une correction de leur phase relative et un ajustement de leurs amplitudes respectives. La correction de phase est effectuée par un déphaseur réglable placé dans le trajet d'un signal et l'ajustement des amplitudes est effectué par un atténuateur réglable placé dans le trajet de chacun des signaux. Un dispositif de commande de diversité, comprenant un microprocesseur, commande la correction de phase et l'ajustement des niveaux, de façon telle que le terme de distorsion mentionné soit, sinon annulé, tout au moins fortement réduit.

Le mode de réalisation décrit dans cet article concerne le cas d'un récepteur hétérodyne comprenant un amplificateur à commande automatique de gain (CAG) en fréquence intermédiaire et un équipement d'analyse du signal comprenant trois dispositifs appelés palpeurs, incluant chacun un filtre à bande étroite, permettant d'évaluer le niveau du signal, respectivement, au centre et près des bords du spectre reçu. Le dispositif de commande de diversité procède selon deux modes de fonctionnement adoptés alternativement, selon le niveau de puissance du signal utile en fréquence intermédiaire. Lorsque le niveau de puissance reçu est suffisant, on applique la recherche du minimum de distorsion. Les niveaux des palpeurs sont combinés pour fournir une valeur de distorsion fournie au processeur qui agit alternativement sur le réglage du déphaseur et des deux atténuateurs dans un sens tel, à chaque fois, que la distorsion soit réduite, jusqu'à ce que la distorsion minimale soit atteinte.

Lorsque, la puissance du signal utile devient inférieure à un certain seuil, c'est le signal de commande automatique de gain de l'amplificateur à CAG qui est fourni au processeur, lequel, agit sur les réglages du déphaseur et des atténuateurs afin de réduire au minimum le signal de CAG, c'est-à-dire d'augmenter au maximum la puissance du signal utile. La commutation d'un mode de fonctionnement à l'autre est franche, quand les conditions qui la déterminent sont réunies.

Par ailleurs, le même article mentionne également que, pour lutter contre la distorsion due à la propagation par trajets multiples, on peut employer un égaliseur auto-adaptatif temporel. Dans l'exemple décrit, cet égaliseur opère en fréquence intermédiaire, à partir de signaux prélevés en bande de base et traités par des circuits de calcul fournissant les coefficients d'un filtre transverse correcteur. L'emploi d'un tel égaliseur est préconisé pour des longueurs de trajets supérieures à 15 km, c'est-à-dire en pratique dans la plupart des cas (notamment au débit de 140 Mb/s en modulation DAM).

La présente invention vise donc, dans les récepteurs des systèmes de transmission par voie hertzienne à diversité d'espace, comprenant un combineur de diversité et un dispositif de commande de diversité, ainsi que des moyens fournissant une valeur de distorsion et des moyens founissant une valeur d'insuffisance de puissance, à simplifier et à rendre plus général le dispositif de commande de diversité de la technique connue.

Selon une première caractéristique de l'invention, le dispositif de commande de diversité comprend des moyens pour additionner ladite valeur de distorsion à ladite valeur d'insuffisance de puissance et pour fournir une grandeur de commande basée uniquement sur cette somme et servant à la commande du combineur de diversité.

Ces dispositions permettent la commande du combineur de diversité, à la fois, en mode de minimum de distorsion et en mode de maximum de puissance, sans passer brutalement de l'un à l'autre.

Selon une autre caractéristique de l'invention, ladite valeur d'insuffisance de puissance est dérivée de la valeur absolue de la différence entre une valeur de puissance nominale et la valeur de la puissance reçue, dérivée du signal de commande de CAG, divisée par la puissance nominale.

Selon une autre caractéristique de l'invention, ladite valeur absolue est élevée à une puissance $m \geq 1$, pour fournir ladite valeur d'insuffisance de puissance.

Ces dispositions ont pour effet de modifier la caractéristique du signal d'insuffisance de puissance de telle sorte que, lorsque la puissance est suffisante, la valeur de distorsion est largement prédominante et que le combineur de diversité fonctionne essentiellement en mode de minimum de distorsion et que, lorsque la puissance est défaillante, la valeur d'insuffisance de puissance soit à son tour prédominante.

Selon une autre caractéristique de l'invention, le dispositif de commande de diversité comprend un dispositif de calcul saisissant les coefficients de l'égaliseur auto-adaptatif de la chaîne de réception et établissant une valeur de distorsion à partir de ces coefficients.

De telles dispositions remplacent avantageusement les palpeurs relativement coûteux mentionnés précédemment. les dispositions et celles qui suivent immédiatement, qui en définissent une mise en oeuvre, font l'objet de la demande de brevet européen n° 89104222.8 (EP-A-0 333 042).

Selon une autre caractéristique de l'invention, le dispositif de calcul effectue une sommation de valeurs absolues dérivées de ces coefficients.

Avantageusement, lesdites valeurs absolues dérivées peuvent comprendre un facteur de pondération. Dans une forme de mise en oeuvre particulièrement simple, les valeurs absolues d'un petit nombre de coefficients seulement sont simplement additionnées.

Selon une autre caractéristique avantageuse de l'invention, les dispositions définies plus haut sont adoptées dans un récepteur à démodulation directe, le combineur de diversité étant prévu au niveau hyperfréquence, tandis que l'amplificateur à CAG et l'égaliseur autoadaptatif sont insérés en bande de base.

On aboutit alors à un récepteur à diversité d'espace d'une simplicité remarquable.

Les différents objets, caractéristiques et avantages de la présente invention seront maintenant détaillés dans la description qui va suivre d'un exemple de réalisation illustré par les figures annexées qui représentent :

- la figure 1, le diagramme général d'un récepteur d'un système de transmission par voie hertzienne comprenant un dispositif de commande de diversité conforme à la présente invention,
- la figure 2, des courbes représentant le signal d'insuffisance de puissance, en fonction de la puissance reçue,
- la figure 3, un organigramme du fonctionnement du dispositif de commande de diversité, conforme à la présente invention,
- la figure 4, des courbes illustrant la puissance reçue en fonction de l'écart en fréquence des évanouissements sélectifs dans différents modes de fonctionnement d'un dispositif de commande de diversité.

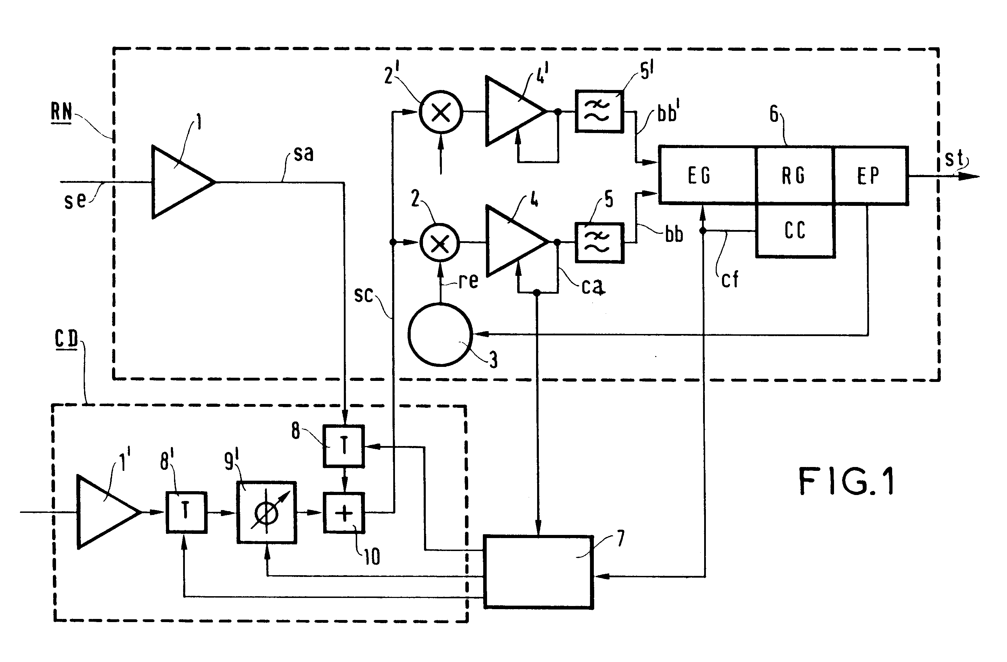

Le diagramme de la figure 1 illustre un exemple d'application de l'invention dans le cas d'un récepteur à démodulation directe.

On décrira d'abord une voie normale de réception complète, en l'absence de diversité d'espace.

Le signal d'entrée se, provenant d'une antenne de réception normale, est amplifié dans un préamplificateur 1 qui fournit un signal amplifié sa, lequel, en l'absence de diversité d'espace, devient un signal sc appliqué à un premier mélangeur 2 recevant par ailleurs une onde de référence de fréquence et de phase re issue d'un oscillateur de référence 3. Le signal issu du mélangeur 2 est appliqué à un amplificateur à commande automatique de gain 4 dont on a représenté de façon symbolique la boucle de CAG fournissant le signal ca représentatif de la puissance reçue. Cet amplificateur est suivi d'un filtre passe-bas 5 laissant passer seulement le signal en bande de base bb.

Dans le cas général d'un système de transmission à plusieurs états de phase, des éléments similaires 2', 4' et 5', fournissent d'autres signaux en bande de base bb'.

Le ou les signaux en bande de base sont traités par un égaliseur auto-adaptatif temporel 6 comprenant un égaliseur EG (filtre transverse), un régénérateur RG et un dispositif d'estimation de phase EP, à la sortie duquel est disponible le signal transmis st et fournissant un signal servant à caler la phase de l'oscillateur 3. Au niveau du régénérateur RG, un circuit de calcul de coefficients CC fournit des coefficients cf commandant l'égaliseur temporel EG. L'ensemble de l'égaliseur 6 correspond, bien qu'il opère en bande de base et non en fréquence intermédiaire, à celui qui est décrit dans l'article précédemment mentionné.

Dans son ensemble un tel récepteur est d'une architecture classique. Le signal hyperfréquence, préamplifié par l'amplificateur 1 est appliqué à des mélangeurs 2, 2', chacun alimenté par une onde de référence d'une même fréquence que le signal reçu et d'une phase particulière. Lorsqu'il y a coïncidence de phase, le signal de sortie du mélangeur contient une composante continue fournie par le filtre passe-bas 5, 5' et se traduit par un signal en bande de base qui correspond à la présence d'un état de phase correspondant dans le signal reçu. La forme de ce signal est corrigée par l'égaliseur EG avant la régénération qui permet de revenir à un signal numérique. L'observation des signaux au niveau du régénérateur RG, appuyée sur les caractéristiques statistiques du signal, permet de produire des valeurs numériques constituant des coefficients directement utilisables par l'égaliseur.

L'égaliseur temporel 6 vise à corriger la courbe de réponse du canal de transmission, de la même manière pour chacun des états de phase, en fonction du signal reçu à l'antenne. Toutefois, si le signal est trop dégradé ou trop affaibli, une telle égalisation ne suffira pas.

La solution connue consiste à utiliser la diversité d'espace, à l'aide d'une deuxième antenne, écartée de la première (à une hauteur différente sur la même tour) et d'un combineur de diversité illustré en CD sur la figure 1. Il comprend un amplificateur 1', analogue à l'amplificateur 1, un atténuateur réglable 8 interposé dans le trajet de la voie normale déjà décrite, un atténuateur réglable 8' semblable à l'atténuateur 8, mais interposé dans le trajet de la voie de diversité, un déphaseur réglable 9' interposé dans le trajet de la voie de diversité et un sommateur 10 qui reçoit et combine les signaux provenant des deux voies, pour fournir le signal sc déjà mentionné. Comme il reste décrit dans l'article déjà cité, moyennant un réglage approprié des atténuateurs et du déphaseur, l'addition des signaux des deux voies, réalisée dans le sommateur 10, peut fournir un signal combiné sc tel que les distorsions causées par les rayons retardés reçus par les deux antennes soient annulées. C'est le fonctionnement en minimum de distorsion. Si la puissance reçue est faible, il est encore possible de combiner en phase les signaux issus des rayons directs et c'est alors le fonctionnement en maximum de puissance.

Les deux atténuateurs et le déphaseur du combineur de diversité sont commandés par un dispositif de commande de diversité 7, auquel les signaux ca et cf sont par ailleurs communiqués.

Le signal ca, comme il est bien connu représente le niveau du signal appliqué à l'entrée de l'amplificateur 4. Selon une des caractéristiques de l'invention, on élabore, à partir de cette amplitude, une valeur d'insuffisance de puissance G, par l'application de la formule :

$$G = K. \left| \frac{Pr - Pn}{Pn} \right|^m$$

dans laquelle Pr est la puissance reçue, dérivée directement du signal ca, Pn est la puissance nominale et K est une constante d'échelle. La valeur m est un exposant dont, selon une autre caractéristique de l'invention, la valeur est égale ou supérieure à 1.

Le calcul de l'expression ci-dessus s'effectue dans le dispositif de commande de diversité 7, de préférence sous forme numérique, après conversion analogique-numérique de l'amplitude du signal ca.

Selon une autre des caractéristiques de l'invention, les coefficients de l'égaliseur temporel autoadaptatif 6 fournissent l'information représentative de la distorsion du canal de transmission.

Dans un égaliseur classique, ces coefficients sont nuls, sauf le coefficient central, lorsque le signal est exempt de distorsion. Ces coefficients sont par ailleurs des valeurs positives et négatives fournies en représentation imaginaire.

Selon une autre caractéristique de l'invention, une valeur de distorsion est établie par l'application de la formule suivante :

$$F = \sum_{\substack{i=-N \\ i \neq 0}}^{L} u. \left| a_i \right| + \sum_{\substack{i=-N \\ i \neq 0}}^{L} v. \left| b_i \right|$$

dans laquelle $a_i$ et $b_i$ sont respectivement les parties réelle et imaginaire du i ème coefficient de l'égaliseur auto-adaptatif, lequel possède N coefficients arrière et L coefficients avant, la somme portant sur les valeurs absolues de ces coefficients, affectées chacune d'un facteur de pondération u ou v. Certains facteurs de pondération peuvent d'ailleurs être nuls, ce qui limite le nombre de termes à inclure dans la somme ci-dessus. D'autres peuvent être égaux à l'unité. Dans une forme de réalisation particulièrement simple, les valeurs absolue de deux ou trois coefficients seulement sont simplement additionnées.

On obtient ainsi une valeur unique F qui représente la distorsion du signal reçu. Avantageusement, le calcul sera réalisé, dans le dispositif de commande de diversité 7, sous la forme numérique à partir des valeurs numériques des coefficients, fournies directement par le circuit de calcul CC.

Selon une autre caractéristique de l'invention, on procède enfin à la somme

H = G + F

et le programme d'ajustement du combineur de diversité est basé uniquement sur cette somme.

La somme H contient, comme on l'a vu, lorsque le niveau de réception est suffisant, principalement le terme F qui caractérise la distorsion et, lorsque le niveau est insuffisant, principalement le terme G qui caractérise l'insuffisance de puissance.

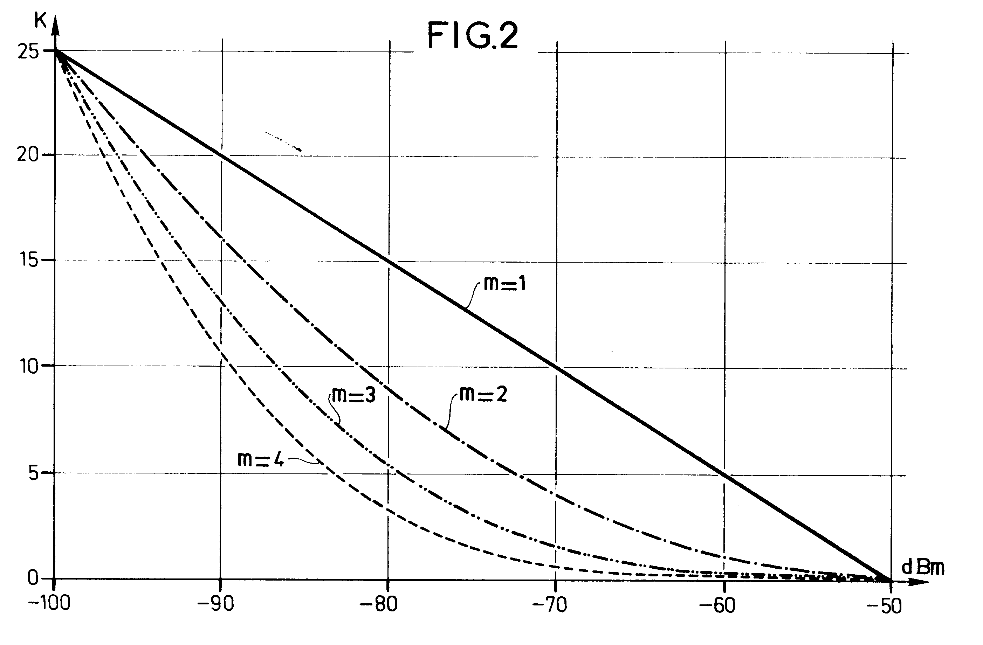

On a vu que le terme G est obtenu par élévation à une puissance m d'une valeur relative de manque de puissance, (Pr - Pp)/Pn. L'effet de cette élévation à la puissance m est illustré par la figure 2 qui représente les valeurs de G en fonction de la puissance reçue Pr, exprimée en dBm, pour différentes valeurs données à m. On y voit que, plus la valeur de m est élevée, plus la caractéristique de G est creuse, ce qui renforce l'effet mentionné au paragraphe précédent, de la prépondérence soit de F, soit de G, dans la somme H.

On arrive ainsi, selon l'invention, comme on va le voir plus en détail, à passer sans discontinuité d'un mode de fonctionnement qui est pratiquement en minimum de distorsion à une mode de fonctionnement qui est pratiquement en maximum de puissance.

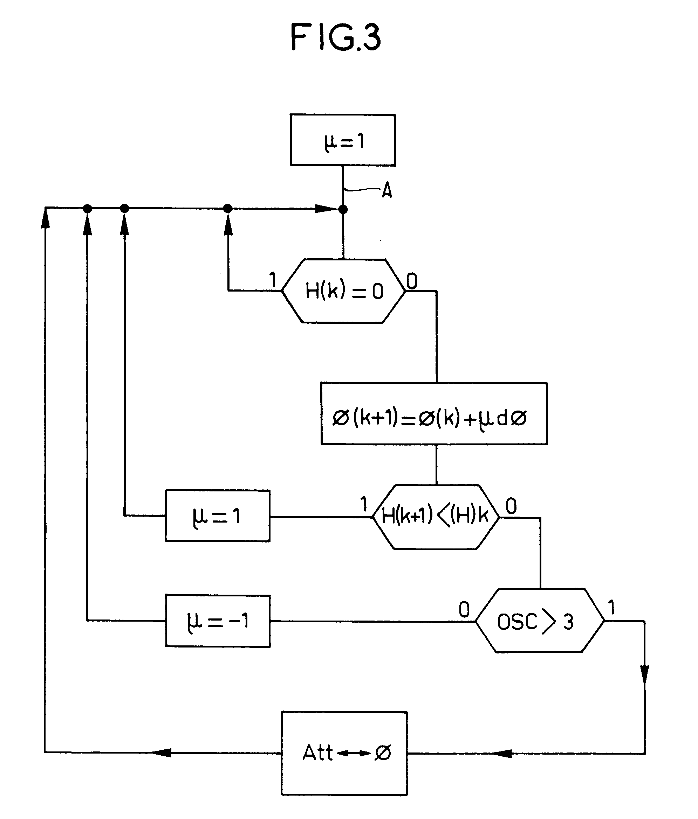

L'utilisation de la valeur de somme H pour l'ajustement du combineur de diversité est illustré par la figure 3 qui représente l'organigramme des opérations de commande accomplies par le dispositif de commande de diversité 7, en ce qui concerne les réglage des éléments du combineur.

Un indicateur $\mu$ est initialement mis à la valeur +1. Le fonctionnement part alors du point A, à intervalles périodiques, par exemple, et se déroule selon des boucles ramenant toutes en ce point A. Les atténuateurs et le déphaseur sont dans une certaine position de réglage. Il s'agit de retoucher ces positions pour réduire et annuler, si possible, la somme H. L'essentiel de l'organigramme illustre le réglage du déphaseur, que l'on va maintenant décrire.

Dans une première étape, la somme H(k), issue d'un ajustement antérieur est comparée à 0. Si cette somme est nulle, l'ajustement du combineur est satisfaisant. Il n'y a pas lieu de le modifier. On retourne donc, sans aucune action, au point A.

Si la somme H est différent de 0, le réglage du déphaseur est modifié d'un pas, selon la formule :

$$\phi(k+1) = \phi(k) + \mu d\phi$$

dans laquelle le réglage nouveau $\phi(k+1)$ est le réglage ancien $\phi(k)$, augmenté d'une quantité $d\phi$, puisque $\mu$ est égal à +1.

Ensuite, avec une certaine temporisation non représentée, le somme H(k+1) obtenue à la suite du nouveau réglage est comparée à la somme ancienne H(k), afin de rechercher si l'ajustement effectué à réduit la somme H. Si c'est bien le cas, la valeur $\mu$ est laissée à +1, de sorte que le pas de réglage suivant sera effectué dans le même sens.

Si le pas de réglage, au contraire, a augmenté la somme H, ce qui peut être le cas si le point de réglage optimal à été dépassé, on examine alors une valeur OSC qui est un compte des oscillations autour d'une même valeur de réglage. Si cette valeur est inférieure à 3, on l'augmente d'une unité et la valeur $\mu$ est inversée, passant de +1 à -1. Ensuite on retourne au point A. Le pas de réglage suivant sera donc effectué en sens opposé.

Le réglage de phase d'effectue ainsi par accomplissement répété des boucles décrites, jusqu'à ce que la somme H s'annule ou, si elle ne s'annule pas, jusqu'à ce que la valeur OSC dépasse 3. Alors, $\phi$ est remplacée par Att et le même processus est accompli pour le réglage d'un atténuateur, ce qui est évoqué par l'expression Att$\leftrightarrow\phi$.

Plus précisément, on peut par exemple procéder à l'ajustement du combineur de diversité en réglant alternativement le déphaseur, l'un des atténuateurs, le déphaseur à nouveau, l'autre atténuateur, etc.

Si la somme H contient essentiellement une valeur de distorsion F, la valeur G étant négligeable, le réglage des éléments du convertisseur de diversité, ainsi accompli pour réduire au minimum la somme H, donc la valeur F, aboutira donc pratiquement à l'obtention du minimum de distorsion. Si, par contre, la valeur G est prédominante dans la somme H, le réglage aboutira donc pratiquement au maximum de puissance. Le passage de l'une à l'autre de ces situations se fera en fonction de l'évolution des termes de la somme H, c'est-à-dire sans variation brutale préjudiciable.

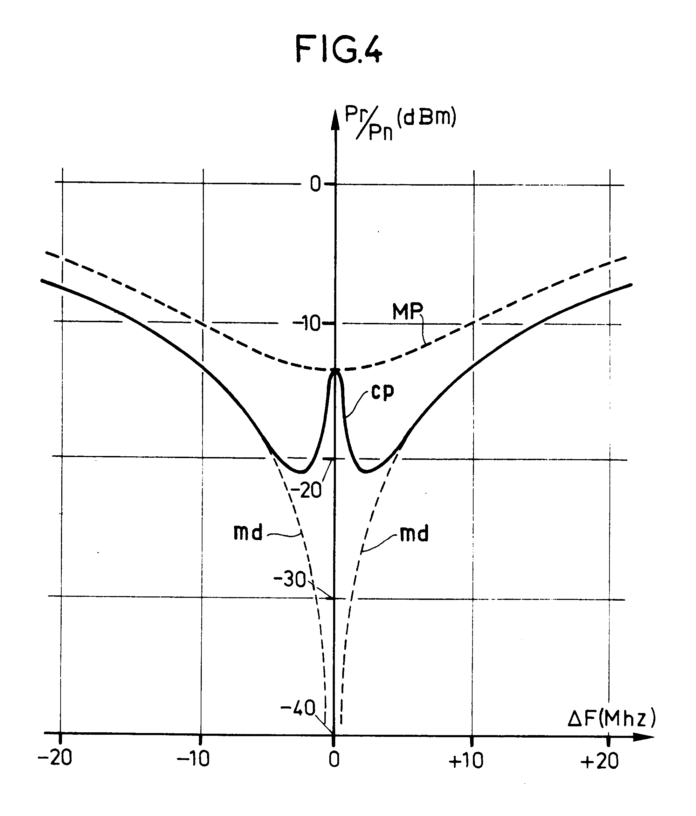

La figure 4 illustre cette conclusion, à partir d'une simulation de différentes conditions de propagation. Elle représente des courbes caractérisant la puissance relative reçue (Pr/Pn), en fonction de l'écart en fréquence des évanouissements sélectifs sur les deux voies, normale et de diversité, dans les différents modes de fonctionnement d'un dispositif de commande de diversité.

La courbe MP indique, à titre de référence, les performances d'un récepteur fonctionnant en mode de maximum de puissance. La puissance reçue s'affaiblit modérément lorsque l'écart en fréquence des affaiblissements sélectifs des deux voies s'amenuise. Toutefois, la distorsion reste importante.

La courbe md, à titre de référence également, correspond au cas d'un récepteur fonctionnant en mode de minimum de distorsion. La puissance reçue tombe profondément lorsque les évanouissements coincident.

La courbe cp correspond au mode de fonctionnement que prévoit l'invention. Lorsque les évanouissements sélectifs sont éloignés en fréquence, la puissance reçue étant suffisante, le mode de fonctionnement est la recherche du minimum de distorsion et la courbe cp suit la courbe md. Lorsque la puissance reçue atteint un minimum défini, le mode de minimum de distorsion est progressivement remplacé par le mode de maximum de puissance et la courbe cp remonte au niveau de la courbe MP.

Il est bien évident que les descriptions qui précèdent n'ont été fournies qu'à titre d'exemple non limitatif et que de nombreuses variantes peuvent être imaginées, sans sortir pour autant du cadre de l'invention.

## Revendications

1. Récepteur pour système de transmission par voie hertzienne à diversité d'espace, comprenant un combineur de diversité et un dispositif de commande de diversité, ainsi que des moyens pour fournir une valeur de distorsion et des moyens pour fournir une valeur d'insuffisance de puissance, caractérisé en ce que le dispositif de commande de diversité (7) comprend des moyens pour additionner ladite valeur de distorsion (F) à ladite valeur d'insuffisance de puissance (G) et pour fournir une grandeur de commande (H) basée uniquement sur cette somme et servant à la commande du combineur de diversité.

2. Récepteur conforme à la revendication 1, caractérisé en ce que, la chaîne de réception comprenant un amplificateur à commande automatique de gain (CAG), ladite valeur d'insuffisance de puissance est dérivée du signal de CAG.

3. Récepteur conforme à, la revendication 2, caractérisé en ce que ladite valeur d'insuffisance de puissance est dérivée de la valeur absolue de la différence entre une valeur de puissance nominale et la valeur de la puissance reçue, dérivée du signal de commande de CAG, divisée par la puissance nominale.

4. Récepteur conforme à la revendication 3, caractérisé en ce que ladite valeur absolue est élevée à une puissance $m \geq 1$, pour fournir ladite valeur d'insuffisance de puissance.

5. Récepteur conforme à l'une quelconque des revendications qui précèdent, caractérisé en ce que le dispositif de commande de diversité (7) comprend un dispositif de calcul saisissant les coefficients de l'égaliseur auto-adaptatif (6) et établissant ladite valeur de distorsion à partir de ces coefficients.

6. Récepteur conforme à la revendication 5, caractérisé en que le dispositif de calcul effectue une sommation de valeurs absolues dérivées de ces coefficients.

7. Récepteur conforme à la revendication 6, caractérisé en ce que lesdites valeurs absolues dérivés peuvent comprendre un facteur de pondération.

8. Récepteur conforme à la revendication 7, caractérisé en ce que les valeurs absolues d'un petit nombre de coefficients seulement sont simplement additionnées.

9. Récepteur conforme à l'une quelconque des revendications qui précèdent, caractérisé en ce que les dispositions définies dans ces revendications sont adoptées dans un récepteur à démodulation directe, le combineur de diversité étant prévu au niveau hyperfréquence, tandis que l'amplificateur à CAG et l'égaliseur auto-adaptatif sont insérés en bande de base.

## Claims

1. A receiver for a space diversity radio transmission system, the receiver including a diversity combiner and a diversity control circuit, and also including means for providing a distortion value and means for providing an insufficient power value, characterized in that the diversity control circuit (7) includes means for adding said distortion value (F) to said insufficient power value (G), and for providing a control magnitude (H) based exclusively upon said sum for controlling the diversity combiner.

2. A receiver according to claim 1, characterized in that the receiver chain including an amplifier with automatic gain control (AGC), said insufficient power value is derived from the AGC-signal.

3. A receiver according to claim 2, characterized in that said insufficient power value is derived from the absolute value of the difference between a nominal power value and the received power value as derived from the AGC-control-signal, said difference being divided by the nominal power.

4. A receiver according to claim 3, characterized in that said absolute value is raised to a power m ≥ 1, in order to provide said insufficient power value.

5. A receiver according to any preceding claim, characterized in that the diversity control circuit (7) includes a calculation circuit receiving the coefficients of a self-adaptive equalizer (6) and establishing said distortion value from said coefficients.

6. A receiver according to claim 5, characterized in that the calculation circuit sums absolute values derived from said coefficients.

7. A receiver according to claim 6, characterized in that said derived absolute values may include weighting factors.

8. A receiver according to claim 7, characterized in that the absolute values of a small number of coefficients only are simply added together.

9. A receiver according to any preceding claim, characterized in that the dispositions defined in said claims are adapted in a direct demodulation receiver, with the diversity combiner operating at microwave level while an AGC amplifier and a self-adaptive equalizer are inserted in baseband.

## Patentansprüche

1. Empfänger für Funkübertragungssysteme mit Raumdiversity, der einen Diversitykombinator und eine Diversitysteuereinrichtung sowie Mittel zur Lieferung eines Verzerrungswertes und Mittel zur Lieferung eines Leistungsmangelwertes aufweist, dadurch gekennzeichnet, daß die Diversitysteuereinrichtung (7) Mittel zum Addieren des Verzerrungswertes (F) zum Leistungsmangelwert (G) und zum Liefern einer Steuergröße (H) umfaßt, die einzig auf dieser Summe basiert und zur Steuerung des Diversitykombinators dient.

2. Empfänger nach Anspruch 1, dadurch gekennzeichnet, daß wobei der Leistungsmangelwert vom CAG-Signal abgeleitet wird, wenn die Empfangskette einen Verstärker mit automatischer Verstärkungssteuerung (CAG) aufweist.

3. Empfänger nach Anspruch 2, dadurch gekennzeichnet, daß der Leistungsmangelwert vom Absolutwert des Unterschiedes zwischen einem nominalen Leistungswert und dem Wert der empfangenen Leistung abgeleitet wird, der seinerseits vom CAG-Steuersignal abgeleitet ist, und daß die Differenz durch die Nominalleistung dividiert wird.

4. Empfänger nach Anspruch 3, dadurch gekennzeichnet, daß der Absolutwert mit einem Exponenten m≥1 potenziert wird, um den Leistungsmangelwert zu liefern.

5. Empfänger nach einem beliebigen der vorhergehenden Ansprüche, dadurch gekennzeichnet, daß die Diversitysteuereinrichtung (7) eine Recheneinrichtung umfaßt, die die Koeffizienten des selbstanpassenden Egalisierers (6) nimmt und den Verzerrungswert aus diesen Koeffizienten berechnet.

6. Empfänger nach Anspruch 5, dadurch gekennzeichnet, daß die Recheneinrichtung eine Summierung der von diesen Koeffizienten abgeleiteten Absolutwerte durchführt.

7. Empfänger nach Anspruch 6, dadurch gekennzeichnet, daß die abgeleiteten Absolutwerte einen Wichtungsfaktor aufweisen können.

8. Empfänger nach Anspruch 7, dadurch gekennzeichnet, daß die Absolutwerte einer nur kleinen Anzahl von Koeffizienten einfach addiert werden.

9. Empfänger nach einem beliebigen der vorhergehenden Ansprüche, dadurch gekennzeichnet, daß die in diesen Ansprüchen definierten Maßnahmen bei einem Empfänger mit direkter Demodulation angewandt werden, wobei der Diversitykombinator im Hochfrequenzbereich arbeitet, während der CAG-Verstärker und der selbstanpassende Egalisierer in das Basisband eingeschaltet sind.

FIG.1

FIG.2

EP 0 333 167 B1

# FIG.3

# FIG.4